(19) Europäisches Patentamt
European Patent Office
Office européen des brevets

(11) EP 2 329 718 A1

(12) EUROPÄISCHE PATENTANMELDUNG

(43) Veröffentlichungstag:
**08.06.2011 Patentblatt 2011/23**

(51) Int Cl.:
***A01N 57/20*** *(2006.01)* ***A01P 13/00*** *(2006.01)*

(21) Anmeldenummer: **10010525.3**

(22) Anmeldetag: **10.08.1999**

(84) Benannte Vertragsstaaten:
**AT BE CH CY DE DK ES FI FR GB GR IE IT LI LU MC NL PT SE**

(30) Priorität: **13.08.1998 DE 19836660**

(62) Dokumentnummer(n) der früheren Anmeldung(en) nach Art. 76 EPÜ:
**99942831.1 / 1 107 667**

(27) Früher eingereichte Anmeldung:
**10.08.1999 PCT/EP99/05794**

(71) Anmelder: **Bayer CropScience AG
40789 Monheim (DE)**

(72) Erfinder:
- **Hacker, Erwin
65239 Hochheim (DE)**
- **Bieringer, Hermann
65817 Eppstein (DE)**
- **Willms, Lothar
65719 Hofheim (DE)**

(74) Vertreter: **Von Renesse, Dorothea et al
König Szynka Tilmann von Renesse
Patentanwälte Partnerschaft
Lohengrinstrasse 11
40549 Düsseldorf (DE)**

Bemerkungen:
Diese Anmeldung ist am 24-09-2010 als Teilanmeldung zu der unter INID-Code 62 erwähnten Anmeldung eingereicht worden.

# (54) Herbizide Mittel für tolerante oder resistente Sojakulturen

(57) Zur Bekämpfung von Schadpflanzen in Soja, der aus toleranten oder resistenten Mutanten oder transgenen Sojapflanzen besteht, eignen sich Herbizid-Kombinationen (A) + (B), gegebenenfalls in Gegenwart von Safenern, mit einem wirksamen Gehalt an (A) breitwirksamen Herbiziden aus der Gruppe: (A1) Glufosinate(salze) und verwandter Verbindungen; (A2) Glyphosate(salze) und verwandte Verbindungen wie Sulfosate; (A3) Imidazolinone wie Imazethapyr, Imazapyr, Imazaquin, Imazamox oder deren Salze und (A4) herbiziden Azolen aus der Gruppe der Hemmstoffe der Protoporphyrinogenoxidase (PPO-Hemmstoffe) besteht; und (B) einem oder mehreren Herbiziden aus der Gruppe, welche aus (B0) einem oder mehreren strukturell anderen Herbiziden aus der genannten Gruppe (A) und/oder (B1) selektiv in Soja gegen monokotyle und überwiegend dikotyle Schadpflanzen wirksamen Herbiziden mit Blattwirkung und/oder Bodenwirkung (Residualwirkung) oder (B2) selektiv in Soja gegen dikotyle Schadpflanzen wirksamen Herbiziden; oder (B3) selektiv in Soja gegen monokotyle Schadpflanzen wirksamen Herbiziden mit Blatt- und Bodenwirkung oder (B4) selektiv in Soja gegen monokotyle und dikotyle Schadpflanzen wirksame Herbizide mit Blattwirkung oder (B5) nicht selektive, zu spezifischen Zwecken in Soja einsetzbare Herbizide wie Paraquat (Salze) oder Herbiziden aus mehreren der Gruppen (B0) bis (B5) besteht, aufweist und die Sojakulturen gegenüber den in der Kombination enthaltenen Herbiziden (A) und (B), gegebenenfalls in Gegenwart von Safenern, tolerant sind.



Printed by Jouve, 75001 PARIS (FR)

## Beschreibung

Die Erfindung liegt auf dem Gebiet der Pflanzenschutzmittel, die gegen Schadpflanzen in toleranten oder resistenten Kulturen von Soja eingesetzt werden können und als Herbizidwirkstoffe eine Kombination von zwei oder mehreren Herbiziden enthalten.

Mit der Einführung von toleranten oder resistenten Sojasorten und -linien, insbesondere von transgenen Sojasorten und -linien, wird das herkömmliche Unkrautbekämpfungssystem um neue, per se in herkömmlichen Sojasorten nichtselektive Wirkstoffe ergänzt. Die Wirkstoffe sind beispielsweise die bekannte breitwirksame Herbizide wie Glyphosate, Sulfosate, Glufosinate, Bialaphos und Imidazolinon-Herbizide [Herbizide (A)], die nunmehr in den jeweils für sie entwickelten toleranten Kulturen eingesetzt werden können. Die Wirksamkeit dieser Herbizide gegen Schadpflanzen in den toleranten Kulturen liegt auf einem hohen Niveau, hängt jedoch - ähnlich wie bei anderen Herbizidbehandlungen - von der Art des eingesetzten Herbizids, dessen Aufwandmenge, der jeweiligen Zubereitungsform, den jeweils zu bekämpfenden Schadpflanzen, den Klima- und Bodenverhältnissen, etc. ab. Ferner weisen die Herbizide Schwächen (Lücken) gegen spezielle Arten von Schadpflanzen auf. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt, wenn überhaupt, durch höhere Aufwandmengen der Herbizide ausgleichen. Außerdem besteht immer Bedarf für Methoden, die Herbizidwirkung mit geringerer Aufwandmenge an Wirkstoffen zu erreichen.

Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Überraschenderweise wurde nun gefunden, daß Wirkstoffe aus der Gruppe der genannten breitwirksamen Herbizide (A) in Kombination mit anderen Herbiziden aus der Gruppe (A) und gegebenenfalls bestimmten Herbiziden (B) in besonders günstiger Weise zusammenwirken, wenn sie in den Sojakulturen eingesetzt werden, die für die selektive Anwendung der erstgenannten Herbizide geeignet sind.

Gegenstand der Erfindung ist somit die Verwendung von Herbizid-Kombinationen zur Bekämpfung von Schadpflanzen in Sojakulturen, dadurch gekennzeichnet, daß die jeweilige Herbizid-Kombination einen synergistisch wirksamen Gehalt an

(A) einem breitwirksamen Herbizid aus der Gruppe der Verbindungen, welche aus

(A1) Verbindungen der Formeln (A1),

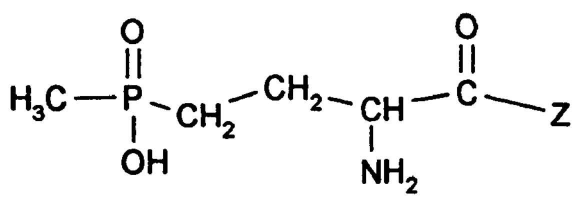

(A1)

worin Z einen Rest der Formel -OH oder einen Peptidrest der Formel $-NHCH(CH_3)CONHCH(CH_3)COOH$ oder-$NHCH(CH_3)CONHCH[CH_2CH(CH_3)_2]COOH$ bedeutet, und deren Estern und Salzen, vorzugsweise Glufosinate und dessen Salzen mit Säuren und Basen, insbesondere Glufosinate-ammonium, L-Glufosinate oder dessen Salzen, Bialaphos und dessen Salzen mit Säuren und Basen und anderen Phosphinothricin-derivaten,

(A2) Verbindungen der Formel (A2) und deren Estern und Salzen,

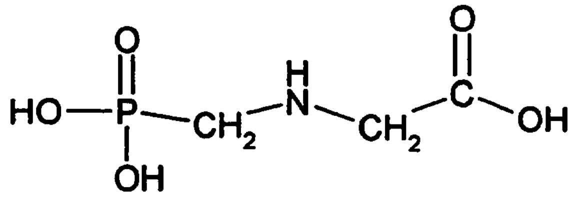

(A2)

vorzugsweise Glyphosate und dessen Alkalimetallsalzen oder Salzen mit Aminen, insbesondere Glyphosate-isopropylammonium, und Sulfosate,

(A3) Imidazolinonen, vorzugsweise Imazethapyr, Imazapyr, Imazamethabenz, Imazamethabenz-methyl, Imazaquin, Imazamox, Imazapic (AC 263,222) und deren Salzen und

(A4) herbiziden Azolen aus der Gruppe der Hemmstoffe der Protoporphyrinogen-oxidase (PPO-Hemmstoffe) wie WC9717 (= CGA276854),

besteht,

und

(B) einem oder mehreren Herbiziden aus der Gruppe der Verbindungen, welche aus

(B0) einem oder mehreren strukturell anderen Herbiziden aus der genannten Gruppe (A) und/oder

(B1) selektiv in Soja gegen monokotyle und überwiegend dikotyle Schadpflanzen wirksamen Herbiziden mit Blattwirkung und/oder Bodenwirkung (Residualwirkung) und/oder

(B2) selektiv in Soja gegen dikotyle Schadpflanzen wirksamen Herbiziden, und/oder

(B3) selektiv in Soja gegen monokotyle Schadpflanzen wirksamen Herbiziden mit Blatt- und Bodenwirkung und/oder

(B4) selektiv in Soja gegen monokotyle und dikotyle Schadpflanzen wirksamen Herbiziden mit Blattwirkung und/oder

(B5) nicht selektiven, zu spezifischen Zwecken in Soja einsetzbaren Herbiziden, wie Paraquat (Salze), besteht,

aufweist und die Sojakulturen gegenüber den in der Kombination enthaltenen Herbiziden (A) und (B), gegebenenfalls in Gegenwart von Safenem, tolerant sind.

Neben den erfindungsgemäßen Herbizid-Kombinationen können weitere Pflanzenschutzmittelwirkstoffe und im Pflanzenschutz übliche Hilfsstoffe und Formulierungshilfsmittel verwendet werden.

Die synergistischen Wirkungen werden bei gemeinsamer Ausbringung der Wirkstoffe (A) und (B) beobachtet, können jedoch auch bei zeitlich getrennter Anwendung (Splitting) festgestellt werden. Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die simultane Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In diese Systemanwendung können auch andere Pflanzenschutzmittel wie Fungizide, Insektizide, Akarizide etc. und/oder verschiedene Hilfsstoffe, Adjuvantien und/oder Düngergaben integriert werden.

Die synergistischen Effekte erlauben eine Reduktion der Aufwandmengen der Einzelwirkstoffe, eine höhere Wirkungsstärke gegenüber derselben Schadpflanzenart bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Bespielsweise werden durch die erfindungsgemäßen Kombinationen aus (A)+(B) synergistische Wirkungssteigerungen möglich, die weit und in unerwarteter Weise über die Wirkungen hinausgehen, die mit den Einzelwirkstoffen (A) und (B) erreicht werden.

In WO-A-98/09525 ist bereits ein Verfahren zur Bekämpfung von Unkräutern in transgenen Kulturen beschrieben, welche gegenüber phosphorhaltigen Herbiziden wie Glufosinate oder Glyphosate resistent sind, wobei Herbizid-Kombinationen eingesetzt werden, welche Glufosinate oder Glyphosate und mindestens ein Herbizid aus der Gruppe Prosulfuron, Primisulfuron, Dicamba, Pyridate, Dimethenamid, Metolachlor, Flumeturon, Propaquizafop, Atrazin, Clodinafop, Norflurazone, Ametryn, Terbutylazin, Simazin, Prometryn, NOA-402989 (3-Phenyl, 4-hydroxy-6-chlorpyridazin), eine Verbindung der Formel

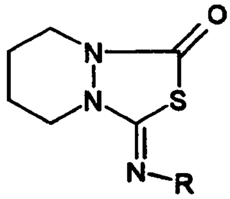

worin R = 4-Chlor-2-fluor-5-(methoxycarbonylmethylthio)-phenyl bedeutet, (bekannt aus US-A-4671819), CGA276854 = 2-Chlor-5-(3-methyl-2,6-dioxo-4-trifluormethyl-3,6-dihydro-2H-pyrimidin-1-yl)-benzoesäure-1-allyloxycarbonyl-1-methylethyl-ester (= WC9717, bekannt aus US-A-5183492) und 2-{N-[N-(4,6-Dimethylpyrimidin-2-yl)-aminocarbonyl]-aminosulfonyl}-benzoesäure-4-oxetanylester (bekannt aus EP-A-496701) enthalten.

Einzelheiten über die erzielbaren oder erzielten Effekte gehen aus der Druckschrift WO-A-98109525 nicht hervor. Beispiele zu synergistischen Effekten oder zur Durchführung des Verfahrens in bestimmten Kulturen fehlen ebenso wie konkrete Kombinationen aus zwei, drei oder weiteren Herbiziden.

Aus DE-A-2856260 sind bereits einige Herbizid-Kombinationen mit Glufosinate oder L-Glufosinate und anderen Herbiziden wie Alloxidim, Linuron, MCPA, 2,4-D, Dicamba, Triclopyr, 2,4,5-T, MCPB und anderen bekannt.

Aus WO-A-92108353 und EP-A 0 252 237 sind bereits einige Herbizid-Kombinationen mit Glufosinate oder Glyphosate und anderen Herbiziden aus der Sulfonylharnstoffreihe wie Metsulfuron-methyl, Nicosulfuron, Primisulfuron, Rimsulfuron u.a. bekannt.

Die Anwendung der Kombinationen zur Bekämpfung von Schadpflanzen ist in den Druckschriften nur an wenigen Pflanzenspezies oder aber an keinem Beispiel gezeigt worden.

In eigenen Versuchen wurde gefunden, daß überraschenderweise große Unterschiede zwischen der Verwendbarkeit der in WO-A-98/09525 und den anderen Druckschriften erwähnten Herbizid-Kombinationen und auch anderer neuartiger Herbizid-Kombinationen in Pflanzenkulturen bestehen.

Erfindungsgemäß werden Herbizid-Kombinationen bereitgestellt, die in toleranten Sojakulturen besonders günstig eingesetzt werden können.

Die Verbindungen der Formel (A1) bis (A5) sind bekannt oder können analog bekannten Verfahren hergestellt werden.

Die Formel (A1) umfaßt alle Stereoisomeren und deren Gemische, insbesondere das Racemat und das jeweils biologisch wirksame Enantiomere, z. B. L-Glufosinate und dessen Salze. Beispiele für Wirkstoffe der Formel (A1) sind folgende:

(A1.1) Glufosinate im engeren Sinne, d. h. D,L-2-Amino-4-[hydroxy(methyl)phosphinyl]-butansäure,
(A1.2) Glufosinate-monoammoniumsalz,
(A1.3) L-Glufosinate, L- oder (2S)-2-Amino-4-[hydroxy(methyl)phosphinyl]-butansäure (Phosphinothricin)
(A1.4) L-Glufosinate-monoammoniumsalz,
(A1.5) Bialaphos (oder Bilanafos), d.h. L-2-Amino-4-[hydroxy(methyl)phosphinyl]-butanoyl-L-alanyl-L-alanin, insbesondere dessen Natriumsalz.

Die genannten Herbizide (A1.1) bis (A1.5) werden über die grünen Teile der Pflanzen aufgenommen und sind als Breitspektrum-Herbizide oder Totalherbizide bekannt; sie sind Hemmstoffe des Enzyms Glutaminsynthetase in Pflanzen; siehe "The Pesticide Manual" 11th Edition, British Crop Protection Council 1997, S. 643-645 bzw. 120-121. Während ein Einsatzgebiet im Nachauflauf-Verfahren zur Bekämpfung von Unkräutern und Ungräsern in Plantagen-Kulturen und auf Nichtkulturland sowie mittels spezieller Applikationstechniken auch zur Zwischenreihenbekämpfung in landwirtschaftlichen Flächenkulturen wie Mais, Baumwolle u.a. besteht, nimmt die Bedeutung der Verwendung als selektive Herbizide in resistenten transgenen Pflanzenkulturen zu. Glufosinate wird üblicherweise in Form eines Salzes, vorzugsweise des Ammoniumsalzes eingesetzt. Das Racemat von Glufosinate bzw. Glufosinate-ammonium wird alleine üblicherweise in Dosierungen ausgebracht, die zwischen 50 und 2000 g AS/ha, meist 200 und 2000 g AS/ha (= g a.i./ha = Gramm Aktivsubstanz pro Hektar) liegen. Glufosinate ist in diesen Dosierungen vor allem dann wirksam, wenn es über grüne Pflanzenteile aufgenommen wird. Da es im Boden mikrobiell innerhalb weniger Tage abgebaut wird, hat es keine Dauerwirkung im Boden. Ähnliches gilt auch für den verwandten Wirkstoff Bialaphos-Natrium (auch Bilanafos-Natrium); siehe "The Pesticide Manual" 11th Ed., British Crop Protection Council 1997 S. 120-121.

In den erfindungsgemäßen Kombinationen benötigt man in der Regel deutlich weniger Wirkstoff (A1), beispielsweise eine Aufwandmenge im Bereich von 20 bis 800, vorzugsweise 20 bis 600 Gramm Aktivsubstanz Glufosinate pro Hektar (g AS/ha oder g a.i./ha). Entsprechende Mengen, vorzugsweise in Mol pro Hektar umgerechnete Mengen, gelten auch für Glufosinate-ammonium und Bialafos bzw. Bialafos-Natrium.

Die Kombinationen mit den blattwirksamen Herbiziden (A1) werden zweckmäßig in Sojakulturen eingesetzt, die gegenüber den Verbindungen (A1) resistent oder tolerant sind. Einige tolerante Sojakulturen, die gentechnisch erzeugt wurden, sind bereits bekannt und werden in der Praxis eingesetzt; vgl. Artikel in der Zeitschrift "Zuckerrübe" 47. Jahrgang (1998), S. 217 ff.; zur Herstellung transgener Pflanzen, die gegen Glufosinate resistent sind, vgl. EP-A-0242246, EP-A-242236, EP-A-257542, EP-A-275957, EP-A-0513054).

Beispiele für Verbindungen (A2) sind

(A2.1) Glyphosate, d. h. N-(Phosphonomethyl)-glycin,

(A2.2) Glyphosate-monoisopropylammoniumsalz,

(A2.3) Glyphosate-natriumsalz,

(A2.4) Sulfosate, d. h. N-(Phosphonomethyl)-glycin-trimesiumsalz = N-(Phosphonomethyl)-glycin-trimethylsulfoxoniumsalz,

Glyphosate wird üblicherweise in Form eines Salzes, vorzugsweise des Monoisopropylammoniumsalzes oder des Trimethylsulfoxoniumsalzes (=Trimesiumsalzes = Sulfosate) eingesetzt. Bezogen auf die freie Säure Glyphosate liegt die Einzeldosierung im Bereich von 0,020-5 kg AS/ha, meist 0,5-5 kg AS/ha.

Glyphosate ist unter manchen anwendungstechnischen Aspekten dem Glufosinate ähnlich, jedoch ist es im Gegensatz dazu ein Hemmstoff für des Enzyms 5-Enolpyruvylshikimat-3-phosphat-Syntase in Pflanzen; siehe "The Pesticide Manual" 11 th Ed., British Crop Protection Council 1997 S. 646-649. In den erfindungsgemäßen Kombinationen benötigt man in der Regel Aufwandmengen im Bereich von 20 bis 1000, vorzugsweise 20 bis 800 g AS/ha Glyphosate.

Auch für Verbindungen (A2) sind bereits gentechnisch erzeugte tolerante Pflanzen bekannt und in der Praxis eingeführt worden; vgl. "Zuckerrübe" 47. Jahrgang (1998), S. 217 ff.; vgl. auch WO 92/00377, EP-A-115673, EP-A-409815.

Beispiele für Imidazolinon-Herbizide (A3) sind

(A3.1) Imazapyr und dessen Salze und Ester,

(A3.2) Imazethapyr und dessen Salze und Ester,

(A3.3) Imazamethabenz und dessen Salze und Ester,

(A3.4) Imazamethabenz-methyl,

(A3.5) Imazamox und dessen Salze und Ester,

(A3.6) Imazaquin und dessen Salze und Ester, z. B. das Ammoniumsalz,

(A3.7) Imazapic (AC 263,222) und dessen Salze und Ester, z. B. das Ammoniumsalz,

Die Herbizide hemmen das Enzym Acetolactatsynthase (ALS) und damit die Proteinsynthese in Pflanzen; sie sind sowohl boden- als auch blattwirksam und weisen teilweise Selektivitäten in Kulturen auf; vgl. "The Pesticide Manual" 11th Ed., British Crop Protection Council 1997 S. 697-699 zu (A3.1). S. 701-703 zu (A3.2), S. 694-696 zu (A3.3) und (A3.4), S. 696-697 zu (A3.5), S. 699-701 zu (A3.6) und S. 5 und 6, referiert unter AC 263,222 (zu A3.7). Die Aufwandmengen der Herbizide sind üblicherweise zwischen 0,01 und 2 kg AS/ha, meist 0,1 bis 2 kg AS/ha; speziell (A3.1) von 20-400 g AS/ha, vorzugsweise 40-360 g AS/ha, (A3.2) von 10-200 g AS/ha, vorzugsweise 20-180 g AS/ha, (A3.3) von 100-2000 g AS/ha, vorzugsweise 150-1800 g AS/ha, (A3.4) von 100-2000 g AS/ha, vorzugsweise 150-1800 g AS/ha, (A3.5) von 1-150 g AS/ha, vorzugsweise 2-120 g AS/ha, (A3.6) von 10-900 g AS/ha, vorzugsweise 20-800 g AS/ha, (A3.7) von 5-2000 g AS/ha, vorzugsweise 10-1000 g AS/ha. In den erfindungsgemäßen Kombinationen liegen sie im Bereich von 10 bis 800 g AS/ha, vorzugsweise 10 bis 200 g AS/ha.

Die Kombinationen mit Imidazolinonen werden zweckmäßig in Sojakulturen eingesetzt, die gegenüber den Imidazolinonen resistent sind. Derartige tolerante Kulturen sind bereits bekannt. EP-A-0360750 beschreibt z.B. die Herstellung von ALS-inhibitortoleranten Pflanzen durch Selektionsverfahren oder gentechnische Verfahren. Die Herbizid-Toleranz der Pflanzen wird hierbei durch einen erhöhten ALS-Gehalt in den Pflanzen erzeugt. US-A-5,198,599 beschreibt sulfonylhamstoff- und imidazolinontolerante Pflanzen, die durch Selektionsverfahren gewonnen wurden.

Beispiele für PPO-Hemmstoffe (A4) sind

(A4.1) Pyraflufen und dessen Ester wie Pyraflufen-ethyl,
(A4.2) Carfentrazone und dessen Ester wie Carfentrazone-ethyl,
(A4.3) Oxadiargyl
(A4.4) Sulfentrazone
(A4.5) WC9717 oder CGA276854 = 2-Chlor-5-(3-methyl-2,6-dioxo-4-trifluormethyl-3,6-dihydro-2H-pyrimidin-1-yl)-benzoesäure-1-allyloxycarbonyl-1-methylethyl-ester (bekannt aus US-A-5183492)

Die genannten Azole sind bekannt als Hemmstoffe des Enzyms Protoporphyrinogenoxidase (PPO) in Pflanzen; siehe "The Pesticide Manual" 11th Ed., British Crop Protection Council 1997 S. 1048-1049 zu (A4.1), S. 191-193 zu (A4.2), S. 904-905 zu (A4.3) und S. 1126-1127 zu (A4.4). Tolerante Pflanzenkulturen sind bereits beschrieben. Die Aufwandmengen der Azole sind in der Regel im Bereich von 1 bis 1000 g AS/ha, vorzugsweise 2 bis 800 g AS/ha, insbesondere folgende Aufwandmengen der einzelnen Wirkstoffe:

(A4.1) 1 bis 100, vorzugsweise 2 bis 80 g AS/ha,
(A4.2) 1 bis 500 g AS/ha, vorzugsweise 5-400 g AS/ha,
(A4.3) 10 bis 1000 g AS/ha, vorzugsweise 20-800 g AS/ha,
(A4.4) 10 bis 1000 g AS/ha, vorzugsweise 20-800 g AS/ha,
(A4.5) 10 bis 1000 g AS/ha, vorzugsweise 20-800 g AS/ha,

Einige gegenüber PPO-Hemmern tolerante Pflanzen sind bereits bekannt.

Als Kombinationspartner (B) kommen beispielsweise Verbindungen der Untergruppen (B0) bis (B4) in Frage (im folgenden mit den in Klammer angegebenen bevorzugten Aufwandmengen angegeben), d. h. ein oder mehrere Herbizide aus der Gruppe, welche aus

(B0) einem oder mehreren strukturell anderen Herbiziden aus der genannten Gruppe (A) und/oder
(B1) selektiv in Soja gegen monokotyle und überwiegend dikotyle Schadpflanzen wirksamen Herbiziden mit Blattwirkung und/oder Bodenwirkung (Residualwirkung) wie

(B1.1) Trifluralin (PM, S. 1248-1250) (250 bis 5000 g AS/ha, insbesondere 400 bis 4000 g AS/ha),
(B1.2) Metribuzin (PM, S. 840-841) (250 bis 4000 g AS/ha, insbesondere 500 bis 3000 g AS/ha),
(B1.3) Clomazone (PM, S. 256-257) (150 bis 5000 g AS/ha, insbesondere 200 bis 3000 g AS/ha),
(B1.4) Pendimethalin (PM, S. 937-939) (250 bis 4000 g AS/ha, insbesondere 500 bis 3000 g AS/ha),
(B1.5) Metolachlor (PM, S. 833-834) auch in der optisch aktiven Form S-Metolachlor (100 bis 5000 g AS/ha, insbesondere 200 bis 4000 g AS/ha),
(B1.6) Flumetsulam (PM, S. 573-574) (5 bis 300 g AS/ha, insbesondere 10 bis 100 g AS/ha),
(B1.7) Dimethenamid (PM, S. 409-410) (20 bis 5000 g AS/ha, insbesondere 50 bis 4000 g AS1ha),
(B1.8) Alachlor (PM, S. 23-24) (250 bis 5000 g AS/ha, insbesondere 500 bis 4000 g AS/ha),
(B1.9) Linuron (PM, S. 751-753) (250 bis 5000 g AS/ha, insbesondere 500 bis 4000 g AS/ha),
(B1.10) Sulfentrazone (PM, S. 1126-1127) (50 bis 2000 g AS/ha, insbesondere 70 bis 1500 g AS/ha),
(B1.11) Ethalfluralin (PM, S. 473-474) (250 bis 5000 g AS/ha, insbesondere 500 bis 4000 g AS/ha),
(B1.12) Fluthiamide (BAY FOE 5043, Flufenacet) (PM, S. 82-83) (50 bis 5000 g AS/ha, insbesondere 70 bis 4000 g AS/ha),
(B1.13) Norflurazon (PM, S. 886-888), (500 bis 5000 g AS/ha, insbesondere 750 bis 4000 g AS/ha) und/oder
(B1.14) Vernolate (PM, S. 1264-1266), (250 bis 5000 g AS/ha, insbesondere 500 bis 4000 g AS/ha) und/oder gegebenenfalls
(81.15) Flumioxazin (PM, S. 576-577), (10 bis 500 g AS/ha, insbesondere 20 bis 400 g AS/ha) und/oder

(B2) selektiv in Soja gegen dikotyle Schadpflanzen wirksamen Herbiziden, beispielsweise

(B2.1) Chlortoluron, Chlorotoluron (PM, S. 229-231) (250 bis 5000 g AS/ha, insbesondere 500 bis 4000 g AS/ha),
(B2.2) Bentazone (PM, S. 109-111) (250 bis 5000 g AS/ha, insbesondere 500 bis 4000 g AS/ha),
(B2.3) Thifensulfuron und dessen Ester, insbesondere der Methylester (PM, S.1188-1190) (1 bis 120 g AS/ha, insbesondere 2 bis 90 g AS/ha),
(B2.4) Oxyfluorfen (PM, S. 919-921) (40 bis 800 g AS/ha, insbesondere 60 bis 600 g AS/ha),

(B2.5) Lactofen (PM, S. 747-748) (20 bis 400 g AS/ha, insbesondere 30 bis 300 g AS/ha),
(B2.6) Fomesafen (PM, S. 616-618) (250 bis 5000 g AS/ha, insbesondere 500 bis 4000 g AS/ha),
(B2.7) Flumiclorac (PM, S. 575-576) und dessen Ester wie der Pentylester (10 bis 400 g AS/ha, insbesondere 20 bis 300 g AS/ha),
(B2.8) Acifluorfen und dessen Natriumsalz (PM, S. 12-14) (40 bis 800 g AS/ha, insbesondere 60 bis 600 g AS/ha),
(B2.9) 2,4-DB (PM, S. 337-339 und dessen Ester und Salze (250 bis 5000 g AS/ha, insbesondere 500 bis 4000 g AS/ha) und/oder
(B2.10) 2,4-D (PM, S. 323-327) und dessen Ester und Salze (250 bis 5000 g AS/ha, insbesondere 500 bis 4000 g AS/ha) und/oder gegebenenfalls
(B2.11) Chlorimuron und Salze und Ester wie Chlorimuron-ethyl (PM, S. 217-218) (200 bis 4000 g AS/ha, insbesondere 500 bis 3000 g AS/ha),
(B2.12) Cloransulam und dessen Salze und Ester wie Cloransulam-methyl (PM, S. 265) (1 bis 150 g AS/ha, insbesondere 3 bis 120 g AS/ha),
(B2.13) Diclosulam (vgl. AG CHEM New Compound Review, Vol. 17, (1999) Seite 37, Triazolopyrimidin-sulfonanilid-Herbizid) (5 bis 150 g AS/ha, insbesondere 10-20 g AS/ha),
(B2.14) Fluthiacet und dessen Salze und Ester wie Fluthiacet-methyl (KIH-9201; PM, S. 606-608) (1-50 g AS/ha, insbesondere 2-40 g AS/ha) und/oder
(B2.15) Oxasulfuron (PM, S. 911-912) (10-300 g AS/ha, insbesondere 20-200 g AS/ha) und/oder

(B3) selektiv in Soja gegen monokotyle Schadpflanzen wirksamen Herbiziden mit Blatt- und Bodenwirkung, beispielsweise Cyclohexandione aus der Gruppe

(B3.1) Sethoxydim (PM, S. 1101-1103) (50 bis 3000 g AS/ha, insbesondere 100 bis 2000 g AS/ha),
(B3.2) Cycloxydim (PM, S. 290-291) (10 bis 1000 g AS/ha, insbesondere 30 bis 800 g AS/ha) und
(B3.3) Clethodim (PM, S. 250-251) (10 bis 800 g AS/ha, insbesondere 20 bis 600 g AS/ha) und/oder

(B4) selektiv in Soja gegen monokotyle Schadpflanzen wirksamen Herbiziden mit Blattwirkung, beispielsweise (Het) aryloxyphenoxyherbizide wie

(B4.1) Quizalofop-P und dessen Ester wie der Ethyl- oder Tefurylester (PM, S. 1089-1092), auch in der Form der Mischungen mit dem anderen optischen Isomer, z. B. das racemische Quizalofop und dessen Ester (10-300 g AS/ha, insbesondere 20-250 g AS/ha),
(B4.2) Fenoxaprop-P und dessen Ester wie der Ethylester (PM, S. 519-520) (10 bis 300 g AS/ha, insbesondere 20 bis 250 g AS/ha), auch in der Form der Mischungen mit dem anderen optischen Isomer, z. B. als racemisches Fenoxaprop-ethyl,
(B4.3) Fluazifop-P und dessen Ester wie der Butylester (PM, S. 556-557) (20 bis 1500 g AS/ha, insbesondere 30 bis 1200 g AS/ha), auch in der Form der Mischungen mit dem anderen optischen Isomer, z. B. als racemisches Fluazifop-butyl,
(B4.4) Haloxyfop und Haloxyfop-P und deren Ester wie der Methyl- oder der -etotylester (PM, S. 660-663) (10-300 g AS/ha, insbesondere 20 bis 250 g AS/ha) und/oder
(B4.5) Propaquizafop (PM, S. 1021-1022) (10-300 g AS/ha, insbesondere 20-250 g AS/ha) und/oder

(B5) nicht selektive, zu spezifischen Zwecken in Soja einsetzbare Herbizide, z. B.

(B5.1) Paraquat (Salze) wie das Paraquat-dichlorid (PM, S. 923-925) (250 bis 5000 g AS/ha, insbesondere 500 bis 4000 g AS/ha)

besteht.

Im Falle von Wirkstoffen auf Basis von Carbonsäuren oder anderen salz- oder esterbildenden Wirkstoffen soll die Bezeichnung der Herbizide durch den "common name" der Säure im allgemeinen auch die Salze und Ester erfassen, vorzugsweise die handelsüblichen Salze und Ester, insbesondere die gängige Handelsform des Wirkstoffes.

Die Aufwandmengen der Herbizide (B) können von Herbizid zu Herbizid stark variieren (vgl. die Angaben zur Gruppe der Verbindungen (A) und (B). Als grobe Richtgröße können folgende Bereiche gelten:

Zu Verbindungen (B0): 5-2000 g AS/ha,
Zu Verbindungen (B1) 5-5000 g AS/ha, vorzugsweise 10-5000 g AS/ha,
Zu Verbindungen (B2): 1-5000 g AS/ha, vorzusgsweise 1-3000 g AS/ha,
Zu Verbindungen (B3): 10-3000 g AS/ha, vorzugsweise 10-1000 g AS/ha,

Zu Verbindungen (B4): 10-1500 g AS/ha, vorzugsweise 5-500 g AS/ha,
Zu Verbindungen (B5): 250-5000 g AS/ha, vorzugsweise 100-2000 g AS/ha.

Die Mengenverhältnisse der Verbindungen (A) und (B) ergeben sich aus den genannten Aufwandmengen für die Einzelstoffe und sind beispielsweise folgende Mengenverhältnisse von besonderem Interesse:

(A):(B) im Bereich von 2000:1 bis 1:2000, vorzugsweise 2000:1 bis 1:1000, insbesondere 200:1 bis 1:100,
(A):(B0) von 2000:1 bis 1:2000, vorzugsweise 400:1 bis 1:400, insbesondere 200:1 bis 1:200,
(A1):(B1) von 400:1 bis 1:500, vorzugsweise von 200:1 bis 1:250, insbesondere von 200:1 bis 1:200, ganz besonders 200:1 bis 1:100
(A1):(B2) von 1500:1 bis 1:200, vorzugsweise 500:1 bis 1:200, insbesondere 200:1 bis 1:100,
(A1):(B3) von 150:1 bis 1:150, vorzugsweise 150:1 bis 1:100, insbesondere 80:1 bis 1:10,
(A1):(B4) von 300:1 bis 1:100, vorzugsweise 300:1 bis 1:30, insbesondere 100:1 bis 1:10,
(A2):(B1) von 200:1 bis 1:250, vorzugsweise 200:1 bis 1:200, insbesondere von 200:1 bis 1:50,
(A2):(B2) von 2000:1 bis 1:250, vorzugsweise von 500:1 bis 1:200, insbesondere von 300:1 bis 1:200,
(A2):(B3) von 200:1 bis 1:150, vorzugsweise von 200:1 bis 1:100,
(A2):(B4) von 300:1 bis 1:100, vorzugsweise von 100:1 bis 1:60, insbesondere von 100:1 bis 1:10,
(A3):(B1) von 300:1 bis 1:2500, vorzugsweise von 200:1 bis 1:2000, insbesondere 300:1 bis 1:1000, ganz besonders von 100:1 bis 1:200,
(A3):(B2) von 3000:1 bis 1:3000, vorzugsweise von 500:1 bis 1:2000, insbesondere von 500:1 bis 1:500,
(A3):(B3) vorzugsweise von 300:1 bis 1:1000, insbesondere von 100:1 bis 1:200,
(A3):(B4) von 200:1 bis 1:800, vorzugsweise von 80:1 bis 1:600, insbesondere 40:1 bis 1:100,
(A4):(B1) von 300:1 bis 1:2500, vorzugsweise von 150:1 bis 1:2000, insbesondere 20:1 bis 1:1000, ganz besonders von 10:1 bis 1:300,
(A4):(B2) von 1500:1 bis 1:2500, vorzugsweise von 750:1 bis 1:2000, insbesondere 200:1 bis 1:500, ganz besonders von 50:1 bis 1:100,
(A4):(B3) von 150:1 bis 1:750, vorzugsweise von 75:1 bis 1:1000, insbesondere 20:1 bis 1:200, ganz besonders von 10:1 bis 1:100,
(A4):(B4) von 150:1 bis 1:750, vorzugsweise von 75:1 bis 1:600, insbesondere von 40:1 bis 1:100, ganz besonders.

Im Falle der Kombination einer Verbindung (A) mit einer oder mehreren Verbindungen (B0) handelt es sich definitionsgemäß um eine Kombination von zwei oder mehreren Verbindungen aus der Gruppe (A). Wegen der breitwirksamen Herbizide (A) setzt eine solche Kombination voraus, daß die transgenen Pflanzen oder Mutanten kreuzresistent gegenüber verschiedenen Herbiziden (A) sind. Derartige Kreuzresistenzen bei transgenen Pflanzen sind bereits bekannt; vgl. WO-A-98/20144.

In Einzelfällen kann es sinnvoll sein, eine oder mehrere der Verbindungen (A) mit mehreren Verbindungen (B), vorzugsweise aus den Klassen (B1), (B2), (B3), (B4) und (B5) zu kombinieren.

Weiterhin können die erfindungsgemäßen Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe und Formulierungshilfsmittel eingesetzt werden.

Zusatzstoffe sind beispielsweise Düngemittel und Farbstoffe.

Bevorzugt sind Herbizid-Kombinationen aus einer oder mehreren Verbindungen (A) mit einer oder mehreren Verbindungen der Gruppe (B1) oder (B2) oder (B3) oder (B4) oder (B5).

Weiter bevorzugt sind Kombinationen von einer oder mehreren Verbindungen (A), z.B. (A1.2) + (A2.2), vorzugsweise einer Verbindung (A), mit einer oder mehreren Verbindungen (B) nach dem Schema:

(A) + (B1) + (B2), (A) + (B1) + (B3), (A) + (B1) + (B4), (A) + (B2) + (B3),
(A) + (B2) + (B4), (A) + (B3) + (B4), (A) + (B1) + (B2) + (B3),
(A) + (B1) + (B2) + (B4), (A) + (B1) + (B3) + (B4), (A) + (B2) + (B3) +(B4).

Dabei sind auch solche Kombinationen erfindungsgemäß, denen noch ein oder mehrere weitere Wirkstoffe anderer Struktur [Wirkstoffe (C)] zugesetzt werden wie

(A) + (B1) + (C), (A) + (B2) + (C), (A) + (B3) + (C) oder (A) + (B4) + (C),
(A) + (B1) + (B2) + (C), (A) + (B1) + (B3) + (C), (A) + (B1) + (B4) + (C),
(A) + (B2) + (B4) + (C), oder (A) + (B3) + (B4) + (C).

Für Kombinationen der letztgenannten Art mit drei oder mehr Wirkstoffen gelten die nachstehend insbesondere

für erfindungsgemäße Zweierkombinationen erläuterten bevorzugten Bedingungen in erster Linie ebenfalls, sofern darin die erfindungsgemäßen Zweierkombinationen enthalten sind und bezüglich der betreffenden Zweierkombination.

Von besonderem Interesse ist die Anwendung der Kombinationen

(A1.1) + (B1.1). (A1.1) + (B1.2), (A1.1) + (B1.3). (A1.1) + (B1.4), (A1.1) + (B1.5),
(A1.1) + (B1.6), (A1.1) + (B1.7), (A1.1) + (B1.8), (A1.1) + (B1.9), (A1.1) + (B1.10),
(A1.1) + (B1.11), (A1.1) + (B1.12), (A1.1) + (B1.13), (A1.1) + (B1.14), (A1.1) + (B1.15),
(A1.1) + (B2.1), (A1.1) + (B2.2), (A1.1) + (B2.3), (A1.1) + (B2.4), (A1.1) + (B2.5),
(A1.1) + (B2.6), (A1.1) + (B2.7), (A1.1) + (B2.8), (A1.1) + (B2.9), (A1.1) + (B2.10),
(A1.1) + (B2.11), (A1.1) + (B2.12), (A1.1) + (B2.13), (A1.1) + (B2.14), (A1.1) + (B2.15),

(A1.1) + (B3.1). (A1.1) + (B3.2), (A1.1) + (B3.3),
(A1.1) + (B4.1), (A1.1) + (B4.2), (A1.1) + (B4.3), (A1.1) + (B4.4), (A1.1) + (B4.5), (A1.1)+(B5.1);
(A1.2) + (B1.1), (A1.2) + (B1.2), (A1.2) + (B1.3), (A1.2) + (B1.4), (A1.2) + (B1.5),
(A1.2) + (B1.6), (A1.2) + (B1.7), (A1.2) + (B1.8), (A1.2) + (B1.9), (A1.2) + (B1.10),
(A1.2) + (B1.11), (A1.2) + (B1.12), (A1.2) + (B1.13), (A1.2) + (B1.14), (A1.2) + (B1.15),
(A1.2) + (B2.1), (A1.2) + (B2.2), (A1.2) + (B2.3), (A1.2) + (B2.4), (A1.2) + (B2.5),
(A1.2) + (B2.6), (A1.2) + (B2.7), (A1.2) + (B2.8), (A1.2) + (B2.9), (A1.2) + (B2.10),
(A1.2) + (B2.11), (A1.2) + (B2.12), (A1.2) + (B2.13), (A1.2) + (B2.14), (A1.2) + (B2.15),
(A1.2) + (B3.1), (A1.2) + (B3.2), (A1.2) + (B3.3),
(A1.2) + (B4.1), (A1.2) + (B4.2), (A1.2) + (B4.3), (A1.2) + (B4.4), (A1.2) + (B4.5), (A1.2) + (B5.1);

(A2.2) + (B1.1), (A2.2) + (B1.2), (A2.2) + (B1.3), (A2.2) + (B1.4), (A2.2) + (B1.5),
(A2.2) + (B1.6), (A2.2) + (B1.7), (A2.2) + (B1.8), (A2.2) + (B1.9), (A2.2) + (B1.10),
(A2.2) + (B1.11), (A2.2) + (B1.12), (A2.2) + (B1.13), (A2.2) + (B1.14), (A2.2) + (B1.15),
(A2.2) + (B2.1), (A2.2) + (B2.2), (A2.2) + (B2.3), (A2.2) + (B2.4), (A2.2) + (B2.5),
(A2.2) + (B2.6), (A2.2) + (B2.7), (A2.2) + (B2.8), (A2.2) + (B2.9), (A2.2) + (B2.10),
(A2.2) + (B2.11), (A2.2) + (B2.12), (A2.2) + (B2.13), (A2.2) + (B2.14), (A2.2) + (B2.15),
(A2.2) + (83.1), (A2.2) + (B3.2), (A2.2) + (B3.3),
(A2.2) + (B4.1), (A2.2) + (B4.2), (A2.2) + (B4.3), (A2.2) + (B4.4), (A2.2) + (B4.5), (A2.2) + (B5.1);

Von besonderem Interesse ist auch die erfindungsgemäße Verwendung der Kombinationen mit einem oder mehreren Herbiziden aus der Gruppe (A), vorzugsweise (A1.2) oder (A2.2), insbesondere (A1.2) und mit einem oder mehreren Herbiziden, vorzugsweise einem Herbizid, aus der Gruppe, welche aus

(B0') einem oder mehreren strukturell anderen Herbiziden aus der genannten Gruppe (A) und/oder
(B1') selektiv in Soja gegen monokotyle und überwiegend dikotyle Schadpflanzen wirksamen Herbiziden mit Blattwirkung und/oder Bodenwirkung (Residualwirkung) wie, Trifluralin, Metribuzin, Clomazone, Pendimethalin, Flumetsulam, Alachlor, Sulfentrazone, Ethalfluralin, Fluthiamide und/oder Vernolate und/oder gegebenenfalls Flumioxazin und/oder
(B2') selektiv in Soja gegen dikotyle Schadpflanzen wirksamen Herbiziden, beispielsweise Chlortoluron, Bentazone, Oxyfluorfen, Lactofen, Fomesafen, Flumiclorac und/oder Acifluorfen und/oder gegebenenfalls Cloransulam, Diclosulam, Fluthiacet und/oder Oxasulfuron und/oder
(B3') selektiv in Soja gegen monodikotyle Schadpflanzen wirksamen Herbiziden mit Blatt- und Bodenwirkung, beispielsweise Sethoxydim, Cycloxydim und/oder Clethodim und/oder
(B4') selektiv in Soja gegen monodikotyle Schadpflanzen wirksamen Herbiziden mit Blattwirkung, beispielsweise (Het)aryloxyphenoxyherbizide wie Quizalofop-P, Quizalofop, Fenoxaprop-P, Fenoxaprop, Fluazifop-P, Fluazifop, Haloxyfop und/oder Haloxyfop-P und/oder
(B5') nicht selektive Herbizide zu spezifischen Zwecken in Soja einsetzbare Herbizide wie Paraquat (Salze) oder

aus Herbiziden aus mehreren der Gruppen (B0') bis (B4') besteht.

Bevorzugt sind dabei die Kombinationen aus der jeweiligen Komponente (A) mit einem oder mehreren Herbiziden aus der Gruppe (B1'), (B2') oder B3').

Weiter bevorzugt sind die Kombinationen (A)+(B1')+(B2'), (A)+(B1')+(B3') oder (A)+(B2')+(B3').

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden. Bevorzugt ist die Anwendung im Nachauflaufverfahren oder im frühen Nachsaat-Vorauflaufverfahren.

Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll. Auf der Seite der monokotylen Unkrautarten werden z.B. Echinochloa spp., Setaria spp., Digitaria spp., Brachiaria spp., Panicum spp., Agropyron spp., Wildgetreideformen und Sorghum spp. gut erfaßt, aber auch Alopecurus spp., Avena spp., Apera spica venti, Lolium spp. und Phalaris spp. Cynodon spp., Poa spp. sowie Cyperusarten und Imperata.

Bei dikotylen Unkrautarten erstreckt sich das Wirkungsspektrum auf Arten wie z.B. Chenopodium spp., Amaranthus spp., Abutilon spp., Ipomoea spp., Polygonum spp., Xanthium spp. und Equisetum gut erfaßt, aber auch Anthemis spp., Lamium spp., Matricaria spp., Stellaria spp., Kochia spp., Viola spp., Datura spp., Chrysanthemum spp., Thlaspi spp., Pharbitis spp.,Sida spp., Sinapis spp., Cupsella spp., Ambrosia spp., Galium spp., Emex spp., Lamium spp., Papaver spp., Solanum spp., Cirsium spp., Veronica spp., Convolvulus spp., Rumex und Artemisia.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich im Vergleich zu den Einzelpräparaten durch eine schneller einsetzende und länger andauernde herbizide Wirkung aus. Die Regenfestigkeit der Wirkstoffe in den erfindungsgemäßen

Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden können, daß ihre Bodenwirkung optimal ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Bei der gemeinsamer Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsern, einen schnelleren Eintritt der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen in der Kulturpflanze, wie Stickstoff oder Ölsäure, reduziert.

Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Verbindungen eine ausgezeichnete herbizide Aktivität gegenüber mono- und dikotylen Unkräutern aufweisen, werden die toleranten bzw. kreuztoleranten Sojapflanzen nur unwesentlich oder gar nicht geschädigt.

Darüberhinaus weisen die erfindungsgemäßen Mittel teilweise hervorragende wachstumsregulatorische Eigenschaften bei den Sojapflanzen auf. Sie greifen regulierend in den pflanzeneigenen Stoffwechsel ein und können damit zur gezielten Beeinflussung von Pflanzeninhaltsstoffen eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten toleranten oder kreuztoleranten Sojakulturen oder noch zu entwickelnden toleranten oder gentechnisch veränderten Sojakulturen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Ölgehalt oder veränderter Qualität, z. B. anderer Fettsäurezusammensetzung des Ernteguts bekannt.

Herkömmliche Wege zur Herstellung neuer Pflanzen, die im Vergleich zu bisher vorkommenden Pflanzen

modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-01 31624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der Erfindung ist deshalb auch ein Verfahren zur Bekämpfung von unerwünschtem Pflanzenwuchs in toleranten Sojakulturen, dadurch gekennzeichnet, daß man ein oder mehrere Herbizide des Typs (A) mit einem oder mehreren Herbiziden des Typs (B) auf die Schadpflanzen, Pflanzenteile davon oder die Anbaufläche appliziert.

Gegenstand der Erfindung sind auch die neuen Kombinationen aus Verbindungen (A)+(B) und diese enthaltende herbizide Mittel.

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formutierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure CalciumSalze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischem und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind:

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen.

Staubförmige Formulierungen enthalten meistens 5 bis 20 Gew.-% an Wirkstoff, versprühbare Lösungen etwa 0,2 bis 25 Gew.-% Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Beispielsweise ist bekannt, daß die Wirkung von Glufosinate-ammonium (A1.2) ebenso wie die seines L-Enantiomeren durch oberflächenaktive Substanzen verbessert werden kann, vorzugsweise durch Netzmittel aus der Reihe der Alkyl-polyglykolethersulfate, die beispielsweise 10 bis 18 C-Atomen enthalten und in Form ihrer Alkali- oder Ammoniumsalze, aber auch als Magnesiumsalz verwendet werden, wie $C_{12}/C_{14}$-Fettalkohol-diglykolethersulfat-Natrium (®Genapol LRO, Hoechst); siehe EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Weiterhin ist bekannt, daß Alkylpolyglykolethersulfate auch als Penetrationshilfsmittel und Wirkungsverstärker für eine Reihe anderer Herbizide, unter anderem auch für Herbizide aus der Reihe der Imidazolinone geeignet sind; siehe EP-A-0502014.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden

vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gew.-Teile eines WirkstoffslWirksstoffgemischs und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277 C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirksstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

Biologische Beispiele

1. Unkrautwirkung im Vorauflauf

Samen bzw. Rhizomstücke von mono- und dikotylen Unkrautpflanzen werden in Papptöpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 600 bis 800 l/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine gute herbizide Vorauflaufwirksamkeit gegen ein breites Spektrum von Ungräsem und Unkräutern auf.

Dabei werden häufig Wirkungen der erfindungsgemäßen Kombinationen beobachtet, die die formaie Summe der Wirkungen bei Einzelapplikation der Herbizide übertreffen (= synergistische Wirkung).

Wenn die beobachteten Wirkungswerte bereits die formale Summe (= $E^A$) der Werte zu den Versuchen mit Einzelapplikationen übertreffen, dann übertreffen sie den Erwartungswert nach Colby (=$E^c$) ebenfalls, der sich nach folgender Formel errechnet und ebenfalls als Hinweis auf Synergismus angesehen wird (vgl. S. R. Colby; in Weeds 15 (1967) S. 20 bis 22):

$$E = A+B-(A \cdot B/100)$$

Dabei bedeuten: A, B = Wirkung der Wirkstoffe A bzw. in % bei a bzw. b g AS/ha; E = Erwartungswert in % bei a+b g AS/ha.

Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Papptöpfen in sandigem Lehmboden ausgelegt, mit Erde abgedeckt und im Gewächshaus unter guten Wachstumsbedingungen angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.

Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Herbizide Wirkung und Kulturpflanzenverträglichkeit (Feldversuch)

Pflanzen von transgenem Soja mit einer Resistenz gegen ein oder mehrere Herbizide (A) wurden zusammen mit typischen Unkrautpflanzen im Freiland auf Parzellen der Größe 2 x 5m unter natürlichen Freilandbedingungen herangezogen; alternativ stellte sich beim Heranziehen der Sojapflanzen die Verunkrautung natürlich ein. Die Behandlung mit den erfindungsgemäßen Mitteln und zur Kontrolle separat mit alleiniger Applikation der Komponentenwirkstoffe erfolgte unter Standardbedingungen mit einem Parzellen-Spritzgerät bei einer Wasseraufwandmenge von 200-300 Liter je Hektar in Parallelversuchen gemäß dem Schema aus Tabelle 1, d. h. im Vorsaat-Vorauflauf, im Nachsaat-Vorauflauf oder im Nachauflauf im frühen, mittleren oder späten Stadium.

Tabelle 1: Anwendungsschema - Beispiele

| Applikation der Wirkstoffe | Vorsaat | Vorauflauf nach Saat | Nachauflauf 1-2-Blatt | Nachauflauf 2-4-Blatt | Nachauflauf 6-Blatt |
|---|---|---|---|---|---|
| kombiniert | (A)+(B) | | | | |
| " | | (A)+(B) | | | |
| " | | | (A)+(B) | | |
| " | | | | (A)+(B) | |
| " | | | | | A)+(B) |
| sequentiell | (A)+(B) | (A)+(B) | | | |
| " | | (A)+(B) | (A)+(B) | | |
| " | A) | (A)+(B) | | | |
| " | (B) | (A)+(B) | | | |
| " | | | (A)+(B) | (A)+(B) | |
| " | | | (A)+(B) | (A)+(B) | (A)+(B) |
| " | (B) | | (A) | (A)+(B) | |
| " | | (B) | | (A)+(B) | (A)+(B) |
| " | | | | (A)+(B) | (A)+(B) |
| " | | | A) | (A)+(B) | (A)+(B) |

Im Abstand von 2, 4, 6 und 8 Wochen nach Applikation wurde die herbizide Wirksamkeit der Wirkstoffe bzw. Wirkstoffmischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte nach einer Prozentskala (100% Wirkung = alle Plfanzen abgestorben; 50 % Wirkung = 50% der Pflanzen und grünen Pflanzenteile abgestorben; 0 % Wirkung = keine erkennbare Wirkung = wie Kontrollparzelle. Die Boniturwerte von jeweils 4 Parzellen wurden gemittelt.

Der Vergleich zeigte, daß die erfindungsgemäßen Kombinationen meist mehr, teilweise erheblich mehr herbizide Wirkung aufweisen als die Summe der Wirkungen der Einzelherbizide. Die Wirkungen lagen in wesentlichen Abschnitten des Boniturzeitraums über den Erwartungswerten nach Colby (vgl. Bonitur in Beispiel 1) und weisen deshalb auf einen Synergismus hin. Die Sojapflanzen dagegen wurden infolge der Behandlungen mit den herbiziden Mitteln nicht oder nur unwesentlich geschädigt.

In den nachfolgenden Tabellen allgemein verwendete Abkürzungen:

| | | |
|---|---|---|
| g AS/ha | = | Gramm Aktivsubstanz (100 % Wirkstoff) pro Hektar |
| $E^A$ | = | Summe der herbiziden Wirkungen der Einzelapplikationen |
| $E^C$ | = | Erwartungswert nach Colby (vgl. Bonitur zu Tabelle 1) |
| Soja LL | = | Glufosinate-tolerante Sojakultur |

Tabelle 2: Herbizide Wirkung im Feldversuch in Soja

| Wirkstoff(e) | Dosis[1]) g AS/ha | Herbizide Wirkung[2]) (%) gegen Equisetum arvense |
|---|---|---|
| (A1.2) | 400 | 70 |
| (B2.5) | 150<br>300 | 0<br>0 |

(fortgesetzt)

| Wirkstoff(e) | Dosis1) g AS/ha | Herbizide Wirkung2) (%) gegen Equisetum arvense |
|---|---|---|
| (A1.2) + (B2.5) | 400+150 | 75 |
| Abkürzungen zu Tabelle 2:<br>1) = Applikation im 4-6-Blattstadium<br>2) = Bonitur 3 Wochen nach Applikation<br>(A1.2) = Glufosinate-ammonium<br>(B2.5) = Lactofen | | |

Tabelle 3: Herbizide Wirkung im Feldversuch in Soja

| Wirkstoff(e) | Dosis1) g AS/ha | Herbizide Wirkung2) (%) gegen Digitalis abscendens |
|---|---|---|
| (A1.2) | 1200 | 36 |
| (B1.8) | 2580 | 48 |
| (A1.2) + (B1.8) | 1200+2580 | 75 (E = 58) |
| Abkürzungen zu Tabelle 3:<br>1) = Applikation Mitte-Ende Bestockung<br>2) = Bonitur 3 Wochen nach Applikation<br>(A1.2) = Glufosinate-ammonium<br>(B1.8) = Alachlor<br>Die behandelte Sojakultur zeigte keine wesentlichen Schäden. | | |

Tabelle 4: Herbizide Wirkung im Feldversuch in Soja

| Wirkstoff(e) | Dosis1) g AS/ha | Herbizide Wirkung2) (%) gegen Sorghum sudaneus |
|---|---|---|
| (A1.2) | 500<br>300 | 65<br>15 |
| (B1.9) | 750 | 15 |
| (A1.2) + (B1.9) | 300 + 750 | 73 ($E^A$= 30) |
| (B2.8) | 360 | 15 |
| (A1.2) + (B2.8) | 300 + 360 | 70 ($E^A$= 30) |
| (B2.3) | 15 | 13 |
| (A1.2) + (B2.3) | 300 + 15 | 33 ($E^A$ = 30) |
| Abkürzungen zu Tabelle 4:<br>1) = Applikation im 4-Blattstadium<br>2) = Bonitur 28 Tage nach Applikation<br>(A1.2) = Glufosinate-ammonium<br>(B2.1) = Linuron<br>(B2.8) = Aciflurofen<br>(B2.3) = Thifensulfuron-methyl | | |

Tabelle 5: Herbizide Wirkung im Feldversuch in Soja

| Wirkstoff(e) | Dosis[1)] g AS/ha | Herbizide Wirkung[2)] (%) gegen Portulaca oleracea | Soja LL |
|---|---|---|---|
| (A1.2) | 500<br>250 | 65<br>20 | 0<br>0 |
| (B2.12) | 18 | 73 | 2 |
| (A1.2) + (B2.12) | 250 + 18 | 95 ($E^A$ = 93) | 3 |
| (B1.15) | 100 | 65 | 0 |
| (A1.2) + (B1.15) | 250 + 100 | 99 ($E^A$ = 85) | 0 |
| (B1.5) | 2240 | 30 | 0 |
| (A1.2) + (B1.5) | 250 + 2240 | 78 ($E^A$ = 50) | 0 |
| (B2.3) | 5 | 45 | 3 |
| (A1.2) + (B2.3) | 250 + 5 | 73 ($E^A$ = 65) | 4 |

Abkürzungen zu Tabelle 5:
1) = Applikation im 8-10-Blattstadium
2) = Bonitur 32 Tage nach Applikation
(A1.2) = Glufosinate-ammonium
(B2.12) = Cloransulam-methyl
(B1.15) = Flumioxazin
(B1.5) = Metolachlor
(B2.3) = Thifensulfuron-methyl

Tabelle 6: Herbizide Wirkung im Feldversuch in Soja

| Wirkstoff(e) | Dosis[1)] g AS/ha | Herbizide Wirkung[2)] (%) gegen Eleusine indica | Soja LL |
|---|---|---|---|
| (A1.2) | 500<br>200 | 80<br>40 | 0<br>0 |
| (B4.2) | 25<br>50 | 30<br>70 | 0<br>0 |
| (A1.2) + (B4.2) | 200 + 25 | 83 ($E^A$ = 70) | 0 |
| (A3.2) | 50 | 27 | 0 |
| (A1.2) + (A3.2) | 200 + 50 | 73 ($E^A$ = 67) | 0 |
| (B2.11) | 12,5 | 5 | 0 |
| (A1.2)+(B2.11) | 200 + 12,5 | 63 ($E^A$ = 45) | 0 |
| (B4.4) | 60 | 45 | 0 |
| (A1.2)+(B4.4) | 200 + 60 | 93 ($E^A$ = 85) | 0 |

Abkürzungen zu Tabelle 6:
1) = Applikation im 3-Blattstadium
2) = Bonitur 42 Tage nach Applikation
(A1.2) = Glufosinate-ammonium
(B4.2) = Fenoxaprop-P-ethyl
(A3.2) = Imazethapyr
(B2.11) = Chlorimuron
(B4.4) = Haloxyfop-P-methyl

Tabelle 7: Herbizide Wirkung im Feldversuch in Soja

| Wirkstoffe) | Dosis[1)] g AS/ha | Herbizide Wirkung [2)] Pharbitis purpureum | Soja LL |
|---|---|---|---|
| (A1.2) | 400<br>200 | 72<br>35 | 0<br>0 |
| (B2.12) | 40 | 45 | 0 |
| (A1.2) + (B2.12) | 200 + 40 | 85 ($E^A$ = 80) | 0 |
| (B1.15) | 12,5 | 30 | 0 |
| (A1.2)+(B1.15) | 200 + 12,5 | 78 ($E^A$ = 65) | 0 |
| (A3.5) | 30 | 40 | 0 |
| (A1.2) + (A3.5) | 200 + 30 | 77 ($E^A$ = 75) | 0 |
| (B2.2) | 480 | 35 | 0 |
| (A1.2) + (B2.2) | 200 + 480 | 80 ($E^A$= 70) | 0 |

Abkürzungen zu Tabelle 7:
1) = Applikation im 3-Blattstadium
2) = Bonitur 42 Tage nach Applikation
(A1.2) = Glufosinate-ammonium
(B2.12) = Cloransulam-methyl
(B1.15) = Flumioxazin
(B1.5) = Metolachlor
(A3.5) = Imazamox
(B2.2) = Bentazone

Tabelle 8: Herbizide Wirkung im Feldversuch in Soja

| Wirkstoff(e) | Dosis[1)] g AS/ha | Herbizide Wirkung[2)] (%) gegen Sida rombifolia | Soja LL |
|---|---|---|---|
| (A1.2) | 300<br>150 | 65<br>25 | 0<br>0 |
| (B2.7) | 50 | 40 | 0 |
| (A1.2) + (B2.7) | 150 + 50 | 83 ($E^A$ = 65) | 0 |
| (B2.15) | 50 | 60 | 0 |
| (A1.2) + (B2.15) | 150 + 50 | 93 ($E^A$ = 85) | 0 |

Abkürzungen zu Tabelle 8:
1) = Applikation im 4-Blattstadium
2) = Bonitur 43 Tage nach Applikation
(A1.2) = Glufosinate-ammonium
(B2.7) = Flumiclorac-pentyl
(B2.15) = Oxasulfuron

Tabelle 9: Herbizide Wirkung im Feldversuch in Soja

| Wirkstoff(e) | Dosis[1)] g AS/ha | Herbizide Wirkung[2)] (%) gegen Xanthium orientalis |
|---|---|---|
| (A1.2) | 500<br>300 | 98<br>96 |

(fortgesetzt)

| Wirkstoff(e) | Dosis[1)] g AS/ha | Herbizide Wirkung[2)] (%) gegen Xanthium orientalis |
|---|---|---|
| (B1.1) | 960 | 0 |
| (A1.2) + (B1.1) | 300 + 960 | 99 ($E^A$= 96) |
| Abkürzungen zu Tabelle 9:<br>1) = Applikation im 5-Blattstadium<br>2) = Bonitur 28 Tage nach Applikation<br>(A1.2) = Glufosinate-ammonium<br>(B1.1) = Trifluralin | | |

Tabelle 10: Herbizide Wirkung im Feldversuch in Soja

| Wirkstoff(e) | Dosis[1)] g AS/ha | Herbizide Wirkung[2)] (%) gegen Abutilon theophrasti |
|---|---|---|
| (A1.2) | 500<br>330 | 95<br>45 |
| (B2.5) | 2240 | 20 |
| (A1.2) + (B1.5) | 330 + 2240 | 67 ($E^A$ = 65) |
| (B1.7) | 1500 | 30 |
| (A1.2) + (B1.7) | 330 + 1500 | 83 ($E^A$ = 75) |
| (B1.6) | 35 | 52 |
| (A1.2) + (B1.6) | 330 + 35 | 99 ($E^A$=92) |
| (B4.4) | 500 | 50 |
| (A1.2) + (B4.4) | 330 + 500 | 99 ($E^A$ = 95) |
| Abkürzungen zu Tabelle 9:<br>1) = Applikation im 4-Blattstadium<br>2) = Bonitur 42 Tage nach Applikation<br>(A1.2) = Glufosinate-ammonium<br>(B1.5) = Metolachlor<br>(B1.7) = Dimethenamid<br>(B1.6) = Flumetsulam<br>(B4.4) = Sulfentrazone | | |

**Patentansprüche**

**1.** Verwendung von Herbizid-Kombinationen zur Bekämpfung von Schadpflanzen in Sojakulturen, **dadurch gekennzeichnet, daß** die jeweilige Herbizid-Kombination einen wirksamen Gehalt an

(A) einem breitwirksamen Herbizid aus der Gruppe der Verbindungen, welche aus

(A1) Verbindungen der Formeln (A1),

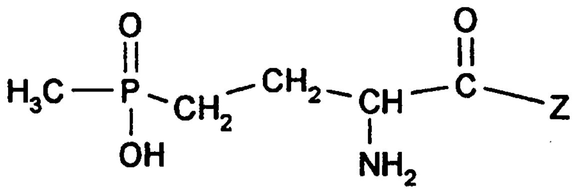

(A1)

worin Z einen Rest der Formel -OH oder einen Peptidrest der Formel $-NHCH(CH_3)CONHCH(CH_3)COOH$ oder $-NHCH(CH_3)CONHCH[CH_2CH(CH_3)_2]COOH$ bedeutet, und deren Estern und Salzen und anderen Phosphinothricin-derivaten,
(A2) Verbindungen der Formel (A2) und deren Estern und Salzen,

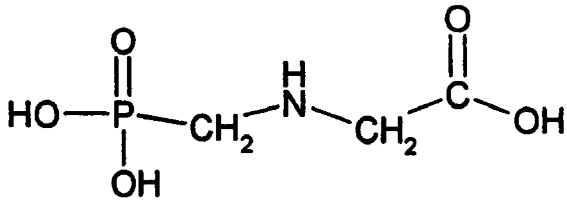

(A2)

(A3) Imidazolinonen und deren Salzen und
(A4) herbiziden Azolen aus der Gruppe der Hemmstoffe der Protoporphyrinogen-oxidase (PPO-Hemmstoffe)
besteht,

und
(B) einem oder mehreren Herbiziden aus der Gruppe der Verbindungen, welche aus

(B0) einem oder mehreren strukturell anderen Herbiziden aus der genannten Gruppe (A),
(B1) selektiv in Soja gegen monokotyle und überwiegend dikotyle Schadpflanzen wirksamen Herbiziden mit Blattwirkung und/oder Bodenwirkung (Residualwirkung),
(B2) selektiv in Soja gegen dikotyle Schadpflanzen wirksamen Herbiziden,
(B3) selektiv in Soja gegen monokotyle Schadpflanzen wirksamen Herbiziden mit Blatt- und Bodenwirkung,
(B4) selektiv in Soja gegen monokotyle und dikotyle Schadpflanzen wirksamen Herbiziden mit Blattwirkung und
(B5) nicht selektiven, zu spezifischen Zwecken in Soja einsetzbaren Herbiziden besteht,

aufweist und die Sojakulturen gegenüber den in der Kombination enthaltenen Herbiziden (A) und (B), gegebenenfalls in Gegenwart von Safenern, tolerant sind.

2. Verwendung nach Anspruch 1, **dadurch gekennzeichnet, daß** als Wirkstoff (A) Glufosinate-ammonium eingesetzt wird.

3. Verwendung nach Anspruch 1, **dadurch gekennzeichnet, daß** als Wirkstoff (A) Glyphosate-isopropylammonium eingesetzt wird.

4. Verwendung nach einem der Ansprüche 1 bis 3, **dadurch gekennzeichnet, daß** als Komponente (B) ein oder mehrere Herbizide aus der Gruppe, welche aus

(B0) einem oder mehreren strukturell anderen Herbiziden aus der genannten Gruppe (A),
(B1) selektiv in Soja gegen monokotyle und überwiegend dikotyle Schadpflanzen wirksamen Herbiziden mit Blattwirkung und/oder Bodenwirkung aus der Gruppe Trifluralin, Metribuzin, Clomazone, Pendimethalin, Metolachlor, Flumetsulam, Dimethenamid, Alachlor, Linuron, Sulfentrazone, Ethalfluralin, Fluthiamide, Norflurazone, Vernolate und Flumioxazin,

(B2) selektiv in Soja gegen dikotyle Schadpflanzen wirksamen Herbiziden aus der Gruppe Chlortoluron, Bentazone, Thifensulfuron, Oxyfluorfen, Lactofen, Fomesafen, Flumiclorac, Acifluorfen, 2,4-DB, 2,4-D, Chlorimuron, Cloransulam, Diclosulam, Fluthiacet und Oxasulfuron,
(B3) selektiv in Soja gegen monokotyle Schadpflanzen wirksamen Herbiziden mit Blatt- und Bodenwirkung aus der Gruppe Sethoxydim, Cycloxydim und Clethodim,
(B4) selektiv in Soja gegen monokotyle Schadpflanzen wirksamen Herbiziden mit Blattwirkung aus der Gruppe Quizalofop-P, Quizalofop, Fenoxaprop-P, Fenoxaprop, Fluazifop-P, Fluazifop, Haloxyfop, Haloxyfop-P und Propaquizafop oder
(B5) nicht selektive Herbizide zu spezifischen Zwecken in Soja einsetzbare Herbizide aus der Gruppe Paraquat oder

aus Herbiziden aus mehreren der Gruppen (B0) bis (B4) besteht, eingesetzt wird.

5. Verwendung nach einem der Ansprüche 1 bis 4, **dadurch gekennzeichnet, daß** die Herbizid-Kombination weitere Pflanzenschutzmittelwirkstoffe enthält.

6. Verwendung nach einem der Ansprüche 1 bis 5, **dadurch gekennzeichnet, daß** die Herbizid-Kombination im Pflanzenschutz übliche Hilfsstoffe und Formulierungshilfsmittel enthält.

7. Verfahren zur Bekämpfung von Schadpflanzen in toleranten Sojakulturen, **dadurch gekennzeichnet, daß** man die Herbizide der Herbizid-Kombination, definiert gemäß einem oder mehreren der Ansprüche 1 bis 5, gemeinsam oder getrennt im Vorauflauf, Nachauflauf oder im Vor- und Nachauflauf auf die Pflanzen, Pflanzenteile, Pflanzensamen oder die Anbaufläche appliziert.

8. Herbizide Zusammensetzung, **dadurch gekennzeichnet, daß** sie eine Kombination aus einem oder mehreren Herbiziden (A), definiert gemäß Anspruch 1, 2 oder 3 und
einem oder mehreren Herbiziden aus der Gruppe, welche aus

(B0') einem oder mehreren strukturell anderen Herbiziden aus der genannten Gruppe (A),
(B1') selektiv in Soja gegen monokotyle und überwiegend dikotyle Schadpflanzen wirksamen Herbiziden mit Blattwirkung und/oder Bodenwirkung aus der Gruppe Trifluralin, Metribuzin, Clomazone, Pendimethalin, Flumetsulam, Alachlor, Sulfentrazone, Ethalfluralin, Fluthiamide, Vernolate und Flumioxazin,
(B2') selektiv in Soja gegen dikotyle Schadpflanzen wirksamen Herbiziden aus der Gruppe Chlortoluron, Bentazone, Oxyfluorfen, Lactofen, Fomesafen, Flumiclorac, Acifluorfen, Cloransulam, Diclosulam, Fluthiacet und Oxasulfuron,
(B3') selektiv in Soja gegen monokotyle Schadpflanzen wirksamen Herbiziden mit Blatt- und Bodenwirkung aus der Gruppe Sethoxydim, Cycloxydim und Clethodim,
(B4') selektiv in Soja gegen monokotyle Schadpflanzen wirksamen Herbiziden mit Blattwirkung aus der Gruppe Quizalofop-P, Quizalofop, Fenoxaprop-P, Fenoxaprop, Fluazifop-P, Fluazifop, Haloxyfop und Haloxyfop-P oder
(B5') nicht selektive Herbizide zu spezifischen Zwecken in Soja einsetzbare Herbizide aus der Gruppe Paraquat oder

aus Herbiziden aus mehreren der Gruppen (B0') bis (B4') besteht, und gegebenenfalls im Pflanzenschutz übliche Zusatzstoffe und Formulierungshilfsmittel enthält.

9. Verwendung der nach Anspruch 8 definierten Zusammensetzung zur Wachstumsregulierung von Sojapflanzen.

10. Verwendung der nach Anspruch 8 definierten Zusammensetzung zur Beeinflussung des Ertrags oder der inhaltstoffe von Sojapflanzen.

Europäisches Patentamt
European Patent Office
Office européen des brevets

# EUROPÄISCHER RECHERCHENBERICHT

Nummer der Anmeldung
EP 10 01 0525

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 98/09525 A (CIBA GEIGY AG ;LUTZ HANS PETER (CH); LEE BRUCE (DE); ZOSCHKE ANDRE) 12. März 1998 (1998-03-12)<br>* Seite 1 - Seite 3, Absatz 4 *<br>* Seite 9, Absatz 1; Ansprüche 1,5,6 *<br>----- | 1-8 | INV.<br>A01N57/20<br>A01P13/00 |
| Y | WO 95/05082 A (HOECHST SCHERING AGREVO GMBH ;DONN GUENTER (DE)) 23. Februar 1995 (1995-02-23)<br>* Seite 1 - Seite 2 *<br>* Seite 4, Absatz 2 - Absatz 3; Ansprüche *<br>----- | 9,10 | |
| Y | WO 97/36488 A (MONSANTO EUROPE SA ;BRANTS IVO (BE); GRAHAM WILLIAM (BE)) 9. Oktober 1997 (1997-10-09)<br>* Seite 3, Absatz 3 - Seite 4, Absatz 3; Ansprüche; Beispiel 10 *<br>----- | 9,10 | |
| X | WO 96/32013 A (CIBA GEIGY ;HUDETZ MANFRED (US); KIDDER DAN WORDEN (US); MILLIKEN) 17. Oktober 1996 (1996-10-17)<br>* Seite 1 - Seite 10, Absatz 2 *<br>* Seite 13 - Seite 14, Zeile 4; Ansprüche 1,7-9,14-17 *<br>----- | 1-7 | RECHERCHIERTE SACHGEBIETE (IPC)<br>A01N |
| X | DATABASE CROPU [Online]<br>Derwent International;<br>1995,<br>HARVEY R G ET AL: "Soybean herbicide studies.",<br>XP002127235,<br>gefunden im STN<br>Database accession no. 1995-89213<br>* Zusammenfassung *<br>-/-- | 1-8 | |

Der vorliegende Recherchenbericht wurde für alle Patentansprüche erstellt

| Recherchenort | Abschlußdatum der Recherche | Prüfer |
|---|---|---|
| München | 4. April 2011 | Kollmannsberger, M |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 10 01 0525

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| | & RES.REP.NORTH CENT.WEED SCI.SOC. (51, 338-43, 1994) 1 TAB., 1994, Univ.Wisconsin<br>----- | | |
| X | DATABASE CROPU [Online] Derwent International; 1996, HARVEY R G ET AL: "Soybean herbicide studies.", XP002127236, gefunden im STN Database accession no. 1996-90386 * Zusammenfassung * & RES.REP.NORTH CENT.WEED SCI.SOC. (52, 316-20, 1995) 1 TAB., 1995, Univ.Wisconsin<br>----- | 1-8 | |
| X | DATABASE CROPU [Online] Derwent International; 1998, HOVERSTAD T R ET AL: "Herbicide performance in soybeans at Waseca, MN in 1997.", XP002127237, gefunden im STN Database accession no. 1998-89754 * Zusammenfassung * & RES.REP.NORTH CENT.WEED SCI.SOC. (54, 408-409, 1997) 1 TAB., 1997,<br>-----<br>-/-- | 1-8 | RECHERCHIERTE SACHGEBIETE (IPC) |

Der vorliegende Recherchenbericht wurde für alle Patentansprüche erstellt

2

| Recherchenort | Abschlußdatum der Recherche | Prüfer |
|---|---|---|
| München | 4. April 2011 | Kollmannsberger, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 10 01 0525

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DATABASE CROPU [Online] Derwent International; 1996, STECKEL G J ET AL: "Weed control in glufosinate tolerant soybeans, Urbana, Illinois, 1995.", XP002127238, gefunden im STN Database accession no. 1996-90678 * Zusammenfassung * & RES.REP.NORTH CENT.WEED SCI.SOC. (52, 336-38, 1995) 2 TAB., 1995, Univ.Illinois ----- | 1,2,4-8 | |
| X | DATABASE CROPU [Online] Derwent International; 1998, JOHNSON W G ET AL: "Weed control programs in glufosinate-tolerant soybean, Columbia, Missouri, 1997.", XP002127239, gefunden im STN Database accession no. 1998-88956 * Zusammenfassung * & RES.REP.NORTH CENT.WEED SCI.SOC. (54, 234-35, 1997) 1 TAB., 1997, Univ.Missouri ----- -/-- | 1,2,4-8 | RECHERCHIERTE SACHGEBIETE (IPC) |

Der vorliegende Recherchenbericht wurde für alle Patentansprüche erstellt

2

| Recherchenort | Abschlußdatum der Recherche | Prüfer |
|---|---|---|
| München | 4. April 2011 | Kollmannsberger, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 10 01 0525

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DATABASE CROPU [Online] Derwent International; 1998, KAPUSTA G ET AL: "Weed control in glufosinate-resistant soybean with glufosinate, flumiclorac, and V-53482 combinations.", XP002127240, gefunden im STN Database accession no. 1998-88957 * Zusammenfassung * & RES.REP.NORTH CENT.WEED SCI.SOC. (54, 236-37, 1997) 2 TAB., 1997, Univ.Southern-Illinois | 1,2,4-8 | |
| X | DATABASE CROPU [Online] Derwent Interantional; 1996, ANDERSON D D ET AL: "Glufosinate efficacy in transgenic soybeans at Lincoln, NE in 1995.", XP002127241, gefunden im STN Database accession no. 1996-90692 * Zusammenfassung * & RES.REP.NORTH CENT.WEED SCI.SOC. (52, 360-61, 1995) 1 TAB., 1995, | 1,2,4-8 | RECHERCHIERTE SACHGEBIETE (IPC) |

-/--

Der vorliegende Recherchenbericht wurde für alle Patentansprüche erstellt

2

| Recherchenort | Abschlußdatum der Recherche | Prüfer |
|---|---|---|
| München | 4. April 2011 | Kollmannsberger, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

## EUROPÄISCHER RECHERCHENBERICHT

Nummer der Anmeldung
EP 10 01 0525

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DATABASE CROPU [Online] Derwent International; 1997, KLAUZER J C ET AL: "1996 Glufosinate/ soybean ( Glycine max) field trials update.", XP002127242, gefunden im STN Database accession no. 1997-87701 * Zusammenfassung * & PROC.NORTH CENT.WEED SCI.SOC. (51, 138-39, 1996), 1996, AgrEvo ----- | 1,2,4-8 | |
| X | DATABASE CROPU [Online] Derwent International; 1995, LUESCHEN W E ET AL: "Weed control with postemergence glyphosate in soybeans at Lamberton, MN in 1994.", XP002127128, gefunden im STN Database accession no. 1995-88943 * Zusammenfassung * & RES.REP.NORTH CENT.WEED SCI.SOC. (51,268-69, 1995) 1 TAB., 1995, Univ.Minnesota ----- | 1,3-8 | RECHERCHIERTE SACHGEBIETE (IPC) |
| X | DATABASE CROPU [Online] Derwent Interataional; 1997, MCNAMARA J W ET AL: "Weed control with glyphosate in transgenic soybeans.", XP002127243, gefunden im STN Database accession no. 1997-88300 * Zusammenfassung * -/-- | 1,3-8 | |

Der vorliegende Recherchenbericht wurde für alle Patentansprüche erstellt

2

| Recherchenort | Abschlußdatum der Recherche | Prüfer |
|---|---|---|
| München | 4. April 2011 | Kollmannsberger, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

EUROPÄISCHER RECHERCHENBERICHT

Nummer der Anmeldung
EP 10 01 0525

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| | & RES.REP.NORTH CENT.WEED SCI.SOC. (53, 288-90, 1996) 1 TAB., 1996, Univ.Nebraska<br>----- | | |
| Y | CHEMICAL ABSTRACTS, Bd. 123, Nr. 11, 11. September 1995 (1995-09-11), Columbus, Ohio, US; abstract no.: 135804, SINZAR, BORIVOJE ET AL: "Efficacy of herbicides in soybean crop in southern Banat", XP002127232 * Zusammenfassung * & PESTICIDI (1995), VOLUME DATE 1995, 10(1), 35-40, 1995,<br>----- | 1-8 | |
| Y | CHEMICAL ABSTRACTS, Bd. 128, Nr. 7, 16. Februar 1998 (1998-02-16), Columbus, Ohio, US; abstract no.: 71922, BEDMAR, FRANCISCO: "Bermudagrass (Cynodon dactylon) control in sunflower (Helianthus annuus), soybean ( Glycine max), and potato (Solanum tuberosum) with postemergence graminicides", XP002127233 * Zusammenfassung * & WEED TECHNOL. (1997), 11(4), 683-688, 1997,<br>-----<br>-/-- | 1-8 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 4. April 2011 | Kollmannsberger, M |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 10 01 0525

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | CHEMICAL ABSTRACTS, Bd. 113, Nr. 7, 13. August 1990 (1990-08-13), Columbus, Ohio, US; abstract no.: 54241, MOSELEY, CARROLL M. ET AL: "Reducing herbicide inputs when establishing no-till soybeans (Glycine max)", XP002127234 * Zusammenfassung * & WEED TECHNOL. (1990), 4(1), 14-19, 1990, ----- | 1-8 | |
| A | C TOMLIN (ED): "The Pesticide Manual, Tenth Edition", 1995, FARNHAM, GB, XP002099499, ISBN: 0-948404-79-5 * Seite 1335 - Seite 1341 * ----- | 1-8 | |
| E | WO 99/45781 A1 (MONSANTO CO [US]; FLINT JERRY L [US]; PROBST NORMAN J [US]; GUBBIGA NA) 16. September 1999 (1999-09-16) * Ansprüche 1-7,10 * ----- | 1-8 | RECHERCHIERTE SACHGEBIETE (IPC) |
| X | WO 97/31535 A1 (BAYER AG [DE]; RIEBEL HANS JOCHEM [DE]; PRIESNITZ UWE [DE]; WIESCHOLLE) 4. September 1997 (1997-09-04) * Ansprüche 2,3 * ----- | 8 | |

2

Der vorliegende Recherchenbericht wurde für alle Patentansprüche erstellt

| Recherchenort | Abschlußdatum der Recherche | Prüfer |
|---|---|---|
| München | 4. April 2011 | Kollmannsberger, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 10 01 0525

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2011

| Im Recherchenbericht angeführtes Patentdokument | Datum der Veröffentlichung | Mitglied(er) der Patentfamilie | Datum der Veröffentlichung |
|---|---|---|---|
| WO 9809525 A | 12-03-1998 | AR 052916 A2 | 11-04-2007 |
| | | AU 720095 B2 | 25-05-2000 |
| | | AU 4209197 A | 26-03-1998 |
| | | BR 9711997 A | 24-08-1999 |
| | | CA 2262970 A1 | 12-03-1998 |
| | | CN 1229334 A | 22-09-1999 |
| | | CO 4820428 A1 | 28-07-1999 |
| | | DE 69718027 D1 | 30-01-2003 |
| | | DE 69718027 T2 | 02-10-2003 |
| | | EP 0930823 A1 | 28-07-1999 |
| | | HU 9904134 A2 | 28-04-2000 |
| | | JP 2000517334 T | 26-12-2000 |
| | | JP 2009001578 A | 08-01-2009 |
| | | RU 2226827 C2 | 20-04-2004 |
| | | ZA 9707948 A | 08-06-1998 |
| WO 9505082 A | 23-02-1995 | AT 172847 T | 15-11-1998 |
| | | AU 700325 B2 | 24-12-1998 |
| | | AU 7497994 A | 14-03-1995 |
| | | BR 9407237 A | 24-09-1996 |
| | | CA 2169282 A1 | 23-02-1995 |
| | | CN 1128938 A | 14-08-1996 |
| | | CZ 9600412 A3 | 15-05-1996 |
| | | DE 4327056 A1 | 16-02-1995 |
| | | DK 0714237 T3 | 19-07-1999 |
| | | EP 0714237 A1 | 05-06-1996 |
| | | ES 2124906 T3 | 16-02-1999 |
| | | HU 74593 A2 | 28-01-1997 |
| | | JP 9501179 T | 04-02-1997 |
| | | NZ 271372 A | 24-10-1997 |
| | | PL 312982 A1 | 27-05-1996 |
| | | RU 2166850 C2 | 20-05-2001 |
| | | ZA 9406038 A | 20-03-1995 |
| WO 9736488 A | 09-10-1997 | AP 927 A | 12-01-2001 |
| | | AT 219329 T | 15-07-2002 |
| | | AU 712463 B2 | 04-11-1999 |
| | | AU 2504997 A | 22-10-1997 |
| | | BG 63796 B1 | 31-01-2003 |
| | | BG 102804 A | 30-07-1999 |
| | | BR 9708457 A | 13-04-1999 |
| | | CN 1220579 A | 23-06-1999 |
| | | CZ 9802872 A3 | 13-01-1999 |
| | | DE 69713496 D1 | 25-07-2002 |
| | | DE 69713496 T2 | 13-02-2003 |
| | | DK 889692 T3 | 15-07-2002 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR.

EP 10 01 0525

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2011

| Im Recherchenbericht angeführtes Patentdokument | Datum der Veröffentlichung | Mitglied(er) der Patentfamilie | Datum der Veröffentlichung |
|---|---|---|---|
| WO 9736488 A | | EE 9800319 A | 15-04-1999 |
| | | ES 2178768 T3 | 01-01-2003 |
| | | HU 9902665 A2 | 28-12-1999 |
| | | IL 126307 A | 21-04-2002 |
| | | JP 2000507565 T | 20-06-2000 |
| | | KR 20000005108 A | 25-01-2000 |
| | | NZ 331764 A | 27-03-2000 |
| | | OA 10888 A | 18-02-2003 |
| | | PL 329125 A1 | 15-03-1999 |
| | | PT 889692 E | 31-10-2002 |
| | | SK 129898 A3 | 11-02-1999 |
| | | TR 9801934 T2 | 18-01-1999 |
| | | US 6083878 A | 04-07-2000 |
| WO 9632013 A | 17-10-1996 | AR 001592 A1 | 26-11-1997 |
| | | AT 230211 T | 15-01-2003 |
| | | AU 697026 B2 | 24-09-1998 |
| | | AU 723452 B2 | 24-08-2000 |
| | | AU 2006202047 A1 | 08-06-2006 |
| | | AU 2009201649 A1 | 21-05-2009 |
| | | BR 9604943 A | 09-06-1998 |
| | | CA 2213498 A1 | 17-10-1996 |
| | | CA 2724731 A1 | 17-10-1996 |
| | | CN 1311990 A | 12-09-2001 |
| | | CN 1326677 A | 19-12-2001 |
| | | CN 1327727 A | 26-12-2001 |
| | | CN 1327728 A | 26-12-2001 |
| | | CN 1327729 A | 26-12-2001 |
| | | CN 1327730 A | 26-12-2001 |
| | | CN 1180993 A | 06-05-1998 |
| | | CO 4650157 A1 | 03-09-1998 |
| | | CZ 9703230 A3 | 18-02-1998 |
| | | DE 69625587 D1 | 06-02-2003 |
| | | DE 69625587 T2 | 04-09-2003 |
| | | EP 0820227 A1 | 28-01-1998 |
| | | ES 2189867 T3 | 16-07-2003 |
| | | HR 960162 A2 | 31-10-1997 |
| | | HU 9801577 A2 | 30-11-1998 |
| | | IL 117872 A | 30-04-2001 |
| | | JP 3416702 B2 | 16-06-2003 |
| | | JP 11503438 T | 26-03-1999 |
| | | PL 322766 A1 | 16-02-1998 |
| | | SK 136697 A3 | 04-02-1998 |
| | | UA 63884 C2 | 16-02-2004 |
| | | US 5981432 A | 09-11-1999 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT ÜBER DIE EUROPÄISCHE PATENTANMELDUNG NR.** EP 10 01 0525

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2011

| Im Recherchenbericht angeführtes Patentdokument | Datum der Veröffentlichung | Mitglied(er) der Patentfamilie | Datum der Veröffentlichung |
|---|---|---|---|
| | | ZA 9602877 A | 14-10-1996 |
| WO 9945781 A1 | 16-09-1999 | AT 241274 T | 15-06-2003 |
| | | AU 754918 B2 | 28-11-2002 |
| | | AU 2991699 A | 27-09-1999 |
| | | BR 9908694 A | 21-11-2000 |
| | | CA 2322262 A1 | 16-09-1999 |
| | | CN 1300185 A | 20-06-2001 |
| | | DE 69908313 D1 | 03-07-2003 |
| | | DE 69908313 T2 | 29-04-2004 |
| | | EP 1061804 A1 | 27-12-2000 |
| | | ES 2200509 T3 | 01-03-2004 |
| | | ID 27537 A | 12-04-2001 |
| | | JP 4633255 B2 | 23-02-2011 |
| | | JP 2002506012 T | 26-02-2002 |
| | | ZA 9901905 A | 29-11-1999 |
| WO 9731535 A1 | 04-09-1997 | AU 1873797 A | 16-09-1997 |
| | | DE 19607633 A1 | 04-09-1997 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9809525 A
- US 4671819 A
- US 5183492 A
- EP 496701 A
- WO 98109525 A
- DE 2856260 A
- WO 92108353 A
- EP 0252237 A
- EP 0242246 A
- EP 242236 A
- EP 257542 A
- EP 275957 A
- EP 0513054 A
- WO 9200377 A
- EP 115673 A
- EP 409815 A
- EP 0360750 A
- US 5198599 A
- WO 9820144 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- EP 0476555 A
- EP 0048436 A
- EP 0336151 A
- US 4400196 A
- EP 0502014 A


### In der Beschreibung aufgeführte Nicht-Patentliteratur


- The Pesticide Manual. British Crop Protection Council, 1997, 643-645
- The Pesticide Manual. British Crop Protection Council, 1997, 120-121
- *Zuckerrübe,* 1998, vol. 47, 217 ff
- The Pesticide Manual. British Crop Protection Council, 1997, 646-649
- The Pesticide Manual. British Crop Protection Council, 1997, 697-699
- The Pesticide Manual. British Crop Protection Council, 1997, 1048-1049
- *AG CHEM New Compound Review,* 1999, vol. 17, 37
- **SAMBROOK et al.** Molecular Cloning, A Laboratory Manual. Cold Spring Harbor Laboratory Press, 1989
- **WINNACKER.** Gene und Klone. VCH, 1996
- **CHRISTOU.** *Trends in Plant Science,* 1996, vol. 1, 423-431
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- **WINNACKER-KÜCHLER.** Chemische Technologie. C. Hauser Verlag, 1986, vol. 7
- **VAN VALKENBURG.** Pesticide Formulations. Marcel Dekker, 1973
- **K. MARTENS.** Spray Drying Handbook. G. Goodwin Ltd, 1979
- **WATKINS.** Handbook of Insecticide Dust Diluents and Carriers
- **H.V. OLPHEN.** Introduction to Clay Colloid Chemistry. J. Wiley & Sons
- **N.Y. MARSDEN.** Solvents Guide. Interscience, 1950
- **MCCUTCHEON'S.** Detergents and Emulsifiers Annual. MC Publ. Corp,
- **SISLEY ; WOOD.** Encyclopedia of Surface Active Agents. Chem. Publ. Co. Inc, 1964
- **SCHÖNFELDT.** Grenzflächenaktive Äthylenoxidaddukte. Wiss. Verlagsgesellschaft, 1976
- Factors Affecting Herbicidal Activity and Selectivity. *Proc. EWRS Symp.,* 1988, 227-232
- **S. R. COLBY.** *Weeds,* 1967, vol. 15, 20-22